# EUROPÄISCHE PATENTSCHRIFT

(11) **EP 1 891 148 B1**
(45) Veröffentlichungstag und Bekanntmachung des Hinweises auf die Patenterteilung: **01.10.2008**
(21) Anmeldenummer: 06763363.6
(22) Anmeldetag: 30.05.2006
(51) Int. Cl.: C08J 9/35, C08J 9/33, B29C 67/20

(54) **VERFAHREN ZUR HERSTELLUNG VON WERKSTÜCKEN**
METHOD FOR PRODUCING WORKPIECES
PROCÉDÉ DE FABRICATION DE PIÈCES

(30) Priorität: 02.06.2005 DE 102005025794
(43) Veröffentlichungstag der Anmeldung: 27.02.2008
(73) Patentinhaber: BASF SE, 67056 Ludwigshafen (DE)
(72) Erfinder: MÖCK, Christof, 68259 Mannheim (DE); SCHORNICK, Gunnar, 67271 Neuleiningen (DE); FRENZEL, Stefan, 68161 Mannheim (DE); EHRENSTEIN, Moritz, 67063 Ludwigshafen (DE); FECHTENKÖTTER, Andreas, 67063 Ludwigshafen (DE); ZIEMER, Antje, 68199 Mannheim (DE)
(86) Internationale Anmeldenummer: PCT/EP2006/062710
(87) Internationale Veröffentlichungsnummer: WO 2006/128861

(56) Entgegenhaltungen:
- EP-A- 0 646 452
- DATABASE WPI Section Ch, Week 200405 Derwent Publications Ltd., London, GB; Class A21, AN 2004-046504 XP002396246 & JP 2003 160687 A (INOAC CORP KK) 3. Juni 2003 (2003-06-03)

## Beschreibung

Die vorliegende Erfindung betrifft ein Verfahren zur Herstellung von Werkstücken, das dadurch gekennzeichnet ist, dass man
(a) Stücke von offenzelligem Aminoplastschaumstoff mit einem mittleren Durchmesser im Bereich von 50 µm bis 5 mm (Gewichtsmittel)
(b) mit mindestens einem filmbildenden Polymerisat vermischt, gewählt aus Copolymerisaten von mindestens einer ethylenisch ungesättigten Mono- oder Dicarbonsäure,
einem Form gebenden Schritt unterzieht
und danach trocknet.

Weiterhin betrifft die vorliegende Erfindung Werkstücke, hergestellt nach dem erfindungsgemäßen Verfahren. Weiterhin betrifft die vorliegende Erfindung die Verwendung der erfindungsgemäßen Werkstücke, beispielsweise als Putzmaterialien zur Reinigung von Oberflächen.

Viele Putzmaterialien wie beispielsweise Reinigungsschwämme und Reinigungstücher werden aus Schaumstoffen hergestellt und erfreuen sich eines wachsenden wirtschaftlichen Interesses. Derartige Putzmaterialien sind jedoch noch nicht frei von Nachteilen.

Bei Putzmaterialien, die aus Schaumstoffen hergestellt werden, beobachtet man, dass sie nach verhältnismäßig kurzer Gebrauchszeit, beispielsweise nach etwa 10 Minuten, soweit zerstört sind, dass keine Putzwirkung mehr erzielt werden kann. Hersteller von Putzmaterialien wie beispielsweise Putzschwämmen empfehlen daher, Putzmaterialien nach entsprechender und im Allgemeinen recht kurzer Gebrauchszeit, beispielsweise 10 Minuten, zu entsorgen. Die Dimensionsstabilität lässt also in zahlreichen Fällen noch zu wünschen übrig.

Weiterhin beobachtet man, dass Oberflächen, die im sauberen Zustand glänzend waren, nach einer Reinigung mit vielen beispielhaft ausgesuchten Schaumstoffen stumpf aussehen.

Es besteht jedoch ein großes Interesse daran, auch ursprünglich glänzende Oberflächen wie beispielsweise Küchenherde oder sogenannte Whiteboards (helle, insbesondere weiße Schreibtafeln, beispielsweise für Büros) zu reinigen, ohne dass derartige Oberflächen ihren Glanz verlieren.

In EP 0 633 283 und DE 100 11 388 wird empfohlen, Melaminharzschaumstoffe zu verstärken, indem man sie beispielsweise mit einer Silikonemulsion imprägniert. Mit Silikonemulsion imprägnierte Schaumstoffe sind jedoch nicht als Putzmaterialien zu gebrauchen, sie hinterlassen beim Gebrauch Schlieren. In DE 100 11 388 wird fernerhin empfohlen, Melaminharzschaumstoffe mit monomeren Fluoralkylestern zu besprühen, um sie ölabweisend zu machen.

EP 0646452 A (BASF AG) offenbart ein Verfahren zur Herstellung von Schaumstoff-Formteilen durch Vermischen von Stücken aus offenzelligem Melaminschaumstoff (Basotect BASF) mit einer mittleren Teilchengrösse von 10 mm und Melaminharz als filmbildendes Polymerisat, Injizieren in einen Formteilautomaten und Tocknen im Heissluftofen,

Ein weiteres großes Arbeitsgebiet sind Verpackungsmaterialien, beispielsweise Verpackungschips und ganze Formteile, die beispielsweise Elektrogeräte in Kartons sicher fixieren und gegen Stöße sichern und die später beim Auspacken leicht entfernt werden können.

Es bestand also die Aufgabe, Werkstücke zur Verfügung zu stellen, die oben beschriebene aus dem Stand der Technik bekannte Nachteile vermeiden. Es bestand weiterhin die Aufgabe, Verfahren zur Herstellung von Werkstücken bereit zu stellen. Es bestand weiterhin die Aufgabe, Verwendungen für Werkstücke herzustellen.

Demgemäß wurde das eingangs definierte Verfahren gefunden.

Unter Werkstücken im Sinne der vorliegenden Erfindung sind Formkörper von beliebigen Dimensionen zu verstehen, die starr oder flexibel sein können. Werkstücke im Sinne der vorliegenden Erfindung können mit manuellen Kräften komprimierbar sein, insbesondere im angefeuchteten Zustand. Vorzugsweise sind Werkstücke im Sinne der vorliegenden Erfindung in mindestens zwei Dimensionen mindestens einen Zentimeter lang, beispielsweise in Länge und Breite.

Bevorzugte Beispiele für Werkstücke im Sinne der vorliegenden Erfindung sind beispielsweise Putzmaterialien wie zum Beispiel Reinigungsschwämme und Reinigungstücher, weiterhin Baumaterialien, Isoliermaterialien, Schalldämmstoffe und Verpackungsmaterialien wie beispielsweise Verpackungschips und Verpackungsformteile.

Das erfindungsgemäße Verfahren geht aus von Stücken von offenzelligen Aminoplastschaumstoff (a). Derartige Stücke haben einen mittleren Durchmesser (Gewichtsmittel) im Bereich von 50 µm bis 5 mm, bevorzugt 75 µm bis 3 mm, besonders bevorzugt 100 µm bis 2 mm.

Im erfindungsgemäßen Verfahren eingesetzte Stücke von offenzelligem Aminoplastschaumstoff (a) können eine breite oder eine enge Durchmesserverteilung aufweisen. Bildet man den Quotienten aus Durchmesser (Massenmittel) zu Durchmesser (Zahlenmittel), so kann der Quotient beispielsweise im Bereich von 1,1 bis 10, bevorzugt 1,2 bis 3 liegen.

Im erfindungsgemäßen Verfahren eingesetzte Stücke von offenzelligem Aminoplastschaumstoff (a) können reguläre oder irreguläre Form aufweisen. Beispiele für reguläre Formen sind Würfel, Quader, Kugeln und Ellipsoide. Beispiele für irreguläre Formen sind Granulate, Fetzen und Schnitzel.

In einer Ausführungsform der vorliegenden Erfindung handelt es sich bei im erfindungsgemäßen Verfahren eingesetzten Stücken von offenzelligem Aminoplastschaumstoff (a) um solche auf Basis von synthetischem organischen Schaumstoff, beispielsweise aus Harnstoff-Formaldehyd-Harzen, insbesondere Aminoplastschaumstoffen auf Basis von Aminoplast-Formaldehyd-Harzen, ganz besonders bevorzugt Melamin-Formaldehyd-Harzen, wobei Aminoplastschaumstoffe auf Basis von Melamin-Formaldehyd-Harzen auch als Melamin-Schaumstoffe bezeichnet werden.

Zur Ausübung des erfindungsgemäßen Verfahrens geht man aus von Stücken von offenzelligem Aminoplastschaumstoff (a), bei dem mindestens 50% aller Lamellen offen sind, bevorzugt 60 bis 100% und besonders bevorzugt 65 bis 99,9%, bestimmt nach DIN ISO 4590.

Im erfindungsgemäßen Verfahren eingesetzte Stücke von offenzelligem Aminoplastschaumstoff (a) sind in einer Ausführungsform der vorliegenden Erfindung aus hartem Aminoplastschaumstoff, das ist im Sinne der vorliegenden Erfindung Aminoplastschaumstoff, der bei einer Stauchung von 40% eine Stauchhärte von 1 kPa oder mehr aufweistt, bestimmt nach DIN 53577.

Im erfindungsgemäßen Verfahren eingesetzte Stücke von offenzelligem Aminoplastschaumstoff (a) sind in einer Ausführungsform der vorliegenden Erfindung aus hartem Aminoplastschaumstoff, der eine Dichte im Bereich von 5 bis 500 kg/m³ hat, bevorzugt 6 bis 300 kg/m³ und besonders bevorzugt im Bereich von 7 bis 300 kg/m³.

Im erfindungsgemäßen Verfahren eingesetzte Stücke von offenzelligem Aminoplastschaumstoff (a) können einen mittleren Porendurchmesser (Zahlenmittel) im Bereich von 1 µm bis 1 mm aufweisen, bevorzugt 50 bis 500 µm, bestimmt durch Auswertung mikroskopischer Aufnahmen an Schnitten.

Im erfindungsgemäßen Verfahren eingesetzte Stücke von offenzelligem Aminoplastschaumstoff (a) können in einer Ausführungsform der vorliegenden Erfindung aus Aminoplastschaumstoff sein, der maximal 20, bevorzugt maximal 15 und besonders bevorzugt maximal 10 Poren pro m² aufweist, die einen Durchmesser im Bereich von bis zu 20 mm haben. Die übrigen Poren haben üblicherweise einen geringeren Durchmesser.

In einer Ausführungsform der vorliegenden Erfindung weisen im erfindungsgemäßen Verfahren eingesetzte Stücke von offenzelligem Aminoplastschaumstoff (a) eine BET-Oberfläche im Bereich von 0,1 bis 50 m²/g auf, bevorzugt 0,5 bis 20 m²/g, bestimmt nach DIN 66131.

In einer Ausführungsform der vorliegenden Erfindung sind im erfindungsgemäßen Verfahren eingesetzte Stücke von offenzelligem Aminoplastschaumstoff (a) aus Aminoplastschaumstoff, der einen Schallabsorptionsgrad von über 50 % aufweist, gemessen nach DIN 52215 bei einer Frequenz von 2000 Hz und einer Schichtdicke des betreffenden Schaumstoffs (a) von 50 mm.

In einer speziellen Ausführungsform der vorliegenden Erfindung sind im erfindungsgemäßen Verfahren eingesetzte Stücke von offenzelligem Aminoplastschaumstoff (a) aus Aminoplastschaumstoff, der einen Schallabsorptionsgrad von über 0,5 aufweist, gemessen nach DIN 52212 bei einer Frequenz von 2000 Hz und einer Schichtdicke des betreffenden Schaumstoffs (a) von 40 mm.

Im erfindungsgemäßen Verfahren eingesetzte Stücke von offenzelligem Aminoplastschaumstoff (a) kann man aus Aminoplastschaumstoff beispielsweise durch Zerkleinern erhalten. Geeignete Zerkleinerungsverfahren sind insbesondere mechanische Zerkleinerungsverfahren wie beispielsweise Gießen, Stanzen, Schneiden, Schnitzeln, Rupfen, Sägen, Mahlen, Kollern, Scheren.

Besonders geeignete Vorrichtungen zum mechanischen Zerkleinern von Aminoplastschaumstoff sind Mühlen, Fräsen, Häcksler, Reiben, Backenbrecher und Mörser.

In einer Ausführungsform der vorliegenden Erfindung stellt man Stücke von offenzelligem Aminoplastschaumstoff (a) aus Aminoplastschaumstoff mit einer Dichte im Bereich von 5 bis 500 kg/m³ und einem mittleren Porendurchmesser im Bereich von 1 µm bis 1 mm durch mechanisches Zerkleinern her.

Als Ausgangsmaterial zur Durchführung des erfindungsgemäßen Verfahrens besonders geeignete Melamin-Schaumstoffe (a) sind als solche bekannt. Ihre Herstellung gelingt beispielsweise durch Verschäumung von
i) einem Melamin-Formaldehyd-Vorkondensat, das neben Formaldehyd weitere Carbonylverbindungen wie beispielsweise Aldehyde einkondensiert enthalten kann, in Gegenwart von
ii) einem oder mehreren Treibmitteln,
iii) gegebenenfalls einem oder mehreren Emulgatoren,
iv) einem oder mehreren Härtern.

Melamin-Formaldehyd-Vorkondensate i) können unmodifiziert sein, sie können aber auch modifiziert sein, beispielsweise können bis zu 20 mol-% des Melamins durch andere an sich bekannte Duroplastbildner ersetzt sein, beispielsweise alkylsubstituiertes Melamin, Harnstoff, Urethan, Carbonsäureamide, Dicyandiamid, Guanidin, Sulfurylamid, Sulfonsäureamide, aliphatische Amine, Phenol und Phenolderivate. Als weitere Carbonylverbindungen neben Formaldehyd können modifizierte Melamin-Formaldehyd-Vorkondensate beispielsweise Acetaldehyd, Trimethylolacetaldehyd, Acrolein, Furfurol, Glyoxal, Phthaldialdehyd und Terephthaldialdehyd einkondensiert enthalten.

Als Treibmittel ii) sind geeignet: Wasser, inerte Gase, insbesondere Kohlendioxid, und sogenannte physikalische Treibmittel. Bei physikalischen Treibmitteln handelt es sich um gegenüber den Einsatzkomponenten inerte Verbindungen, die vorzugsweise bei Raumtemperatur flüssig sind und bei den Bedingungen der Aminoplastbildung verdampfen. Vorzugsweise liegt der Siedepunkt dieser Verbindungen unter 110°C, insbesondere unter 80 °C. Zu den physikalischen Treibmitteln zählen auch inerte Gase, die in die Einsatzkomponenten i) und ii) eingebracht bzw. in ihnen gelöst werden, beispielsweise Kohlendioxid, Stickstoff oder Edelgase.

Geeignete bei Raumtemperatur flüssigen Verbindungen werden ausgewählt aus der Gruppe, enthaltend Alkane und/oder Cycloalkane mit mindestens 4 Kohlenstoffatomen, Dialkylether, Ester, Ketone, Acetale, Fluoralkane mit 1 bis 8 Kohlenstoffatomen, und Tetraalkylsilane mit 1 bis 3 Kohlenstoffatomen in der Alkylkette, insbesondere Tetramethylsilan.

Als Beispiele seien genannt: Propan, n-Butan, iso- und Cyclobutan , n-, iso- und Cyclopentan, Cyclohexan, Dimethylether, Methylethylether, Methyl-tert.-butylether, Ameisensäuremethylester, Aceton sowie fluorierte Alkane, die in der Troposphäre abgebaut werden können und deshalb für die Ozonschicht unschädlich sind, wie Trifluormethan, Difluormethan, 1,1,1,3,3-Pentafluorbutan, 1,1,1,3,3-Pentafluorpropan, 1,1,1,2-Tetrafluorethan, 1,1,1-Trifluor-2,2,2-trichlorethan, 1,1,2-Trifluor-1,2,2-trichlorethan, Difluorethane und Heptafluorpropan. Die genannten physikalischen Treibmittel können allein oder in beliebigen Kombinationen untereinander eingesetzt werden.

Der Einsatz von Perfluoralkanen zur Erzeugung feiner Zellen ist aus EP-A 0 351 614 bekannt.

Als Emulgatoren iii) kann man übliche nicht-ionogene, anionische, kationische oder betainische Tenside einsetzen, insbesondere C₁₂-C₃₀-Alkylsulfonate, bevorzugt C₁₂-C₁₈-Alkylsulfonate und mehrfach ethoxylierte C₁₀-C₂₀-Alkylalkohole, insbesondere der Formel R⁶-O(CH₂-CH₂-O)ₓ-H, wobei R⁶ gewählt wird aus C₁₀-C₂₀-Alkyl und x beispielsweise eine ganze Zahl im Bereich von 5 bis 100 bedeuten kann.

Als Härter iv) kommen insbesondere saure Verbindungen in Frage, wie beispielsweise anorganische Brønstedsäuren, z.B. Schwefelsäure oder Phosphorsäure, organische Brønstedsäuren wie beispielsweise Essigsäure oder Ameisensäure, Lewissäuren und auch sogenannte latente Säuren.

Beispiele für geeignete Melamin-Schaumstoffe und Verfahren zu ihrer Herstellung finden sich in EP-A 0 017 672.

Natürlich kann Aminoplastschaumstoff Additive und Zuschlagstoffe enthalten, die in der Schaumstoffchemie üblich sind, beispielsweise Antioxidantien, Flammschutzmittel, Füllstoffe, Farbmittel wie beispielsweise Pigmente oder Farbstoffe und Biozide, beispielsweise

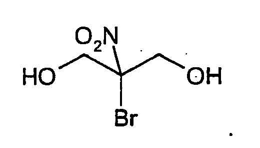

Erfindungsgemäß vermischt man Stücke von offenzelligem Aminoplastschaumstoff mit mindestens einem filmbildenden Polymerisat (b), das im Rahmen der vorliegenden Erfindung Homopolymerisate und Copolymerisate umfassen kann.

Filmbildendes Polymerisat (b) kann man vorzugsweise als wässrige Dispersion oder Emulsion einsetzen, beispielsweise mit einem Feststoffgehalt im Bereich von 1 bis 90 Gew.-%, bevorzugt 5 bis 70 Gew.-%, besonders bevorzugt 10 bis 50 Gew.-%.

In einer Ausführungsform der vorliegenden Erfindung handelt es sich bei filmbildendem Polymerisat um ein Polymerisat mit einer Mindestfilmbildungstemperatur im Bereich von -30°C bis +70°C, bevorzugt -25°C bis 30°C, bestimmt beispielsweise nach DIN 53787/ISO 2115.

In der vorliegenden Erfindung handelt es sich bei filmbildendem Polymerisat (b) um ein (Co)polymerisat von mindestens einer ethylenisch ungesättigten Mono- oder Dicarbonsäure, beispielsweise Crotonsäure, Maleinsäure, Fumarsäure, Metaconsäure, Citraconsäure und insbesondere (Meth)acrylsäure. (Co)polymerisat von mindestens einer ethylenisch ungesättigten Mono- oder Dicarbonsäure kann dabei partiell oder vollständig neutralisiert sein, beispielsweise mit Basen. Geeignete Basen sind beispielsweise basische Alkalimetallsalze, z. B. Hydroxide oder Carbonate wie bevorzugt Natriumhydroxid, Natriumcarbonat, Kaliumcarbonat oder Kaliumhydroxid. Weitere geeignete Basen sind Amine, unsubstituiert oder substituiert mit einem bis zu vier gleichen oder verschiedenen organischen Resten. Geeignete organische Reste sind beispielsweise Phenyl,
C₁-C₁₀-Alkyl, ausgewählt aus Methyl, Ethyl, n-Propyl, iso-Propyl, n-Butyl, iso-Butyl, sec.-Butyl, tert.-Butyl, n-Pentyl, iso-Pentyl, sec.-Pentyl, neo-Pentyl, 1,2-Dimethylpropyl, iso-Amyl, n-Hexyl, iso-Hexyl, sec.-Hexyl, n-Heptyl, iso-Heptyl, n-Octyl, n-Nonyl, n-Decyl, bevorzugt lineares C₁-C₆-Alkyl wie Methyl, Ethyl, n-Propyl, n-Butyl, n-Pentyl, n-Hexyl, iso-Hexyl, sec.-Hexyl, besonders bevorzugt C₁-C₄-Alkyl wie Methyl, Ethyl, n-Propyl, n-Butyl, ganz besonders bevorzugt Methyl und Ethyl,
und ω-Hydroxy-C₁-C₄-Alkyl, beispielsweise 4-Hydroxybutyl, 3-Hydroxypropyl und insbesondere 2-Hydroxyethyl.

Ganz besonders bevorzugte Amine sind Ammoniak, Diethylamin, Triethylamin, Diethanolamin, *N*-Methyl-diethanolamin, *N*-Methyl-ethanolamin, *N*-n-butyl-diethanolamin, *N*-n-butylethanolamin, *N,N*-Dimethylethanolamin und N,N-Diethylethanolamin.

Filmbildende Polymerisate können beispielsweise Blockcopolymere, alternierende Copolymere und vorzugsweise statistische Copolymere sein.

Filmbildende Polymerisate können beispielsweise ein mittleres Molekulargewicht M_{w} im Bereich von 1.000 bis 1.000.000 g/mol aufweisen, bevorzugt sind 2.000 bis 250.000 g/mol.

Bevorzugte filmbildende Polymerisate sind gegebenenfalls partiell oder vollständig neutralisierte
- Homopolymere der Acrylsäure,
- Copolymere von (Meth)acrylsäure mit Maleinsäure, Fumarsäure oder C₁-C₁₀-Alkyl(meth)acrylaten,
- Copolymere von Ethylen mit (Meth)acrylsäure oder Maleinsäure und gegebenenfalls einem oder mehreren C₁-C₁₀-Alkyl(meth)acrylaten,
- Copolymere von Styrol mit (Meth)acrylsäure oder Maleinsäure oder Fumarsäure.
   Besonders bevorzugte filmbildende Polymerisate sind gegebenenfalls partiell oder vollständig neutralisierte
- Copolymere von (Meth)acrylsäure mit Maleinsäure oder Fumarsäure mit einem Monomerverhältnis (Meth)acrylsäure zu Maleinsäure bzw. Fumarsäure im Bereich von 100 : 1 bis 1 : 1, bevorzugt 10 : 1 bis 50 : 50,
- Copolymere von (Meth)acrylsäure mit C₁-C₁₀-Alkyl(meth)acrylat mit einem Monomerverhältnis (Meth)acrylsäure zu C₁-C₁₀-Alkyl(meth)acrylat im Bereich von 100 : 1 bis 1 : 100, bevorzugt 10 : 1 bis 1 : 10, besonders bevorzugt 3 : 1 bis 1 : 3,
- Copolymere von Ethylen mit (Meth)acrylsäure oder Maleinsäure mit einem Molverhältnis Ethylen zu (Meth)acrylsäure oder Maleinsäure im Bereich von 100 : 1 bis 3 : 1, bevorzugt 10 : 1 bis 4 : 1,
- Copolymere von Styrol mit (Meth)acrylsäure mit einem Monomerverhältnis Styrol zu (Meth)acrylsäure im Bereich von 100 : 1 bis 1 : 100, bevorzugt 10 : 1 bis 1 : 10, besonders bevorzugt 3 : 1 bis 1 : 3,
- Copolymere von Styrol mit Maleinsäure oder Fumarsäure mit einem Monomerverhältnis Styrol zu Maleinsäure bzw. Fumarsäure im Bereich von 100 : 1 bis 1 : 1, bevorzugt 10 : 1 bis 50 : 50.

Die Herstellung von filmbildenden Polymerisaten ist an sich bekannt und kann durch beliebige Methoden beispielsweise der radikalischen Polymerisation oder Copolymerisation der entsprechenden Monomere bzw. Comonomere erfolgen. Anschließend emulgiert bzw. dispergiert man filmbildendes Polymerisat, vorzugsweise in Wasser. Hat man filmbildendes Polymerisat beispielsweise durch eine Methode der Emulsionspolymerisation hergestellt, so kann das anschließende Emulgieren bzw. Dispergieren entfallen, und man setzt die durch die Emulsionspolymerisation erhältlich Emulsion bzw. Dispersion zur Durchführung des erfindungsgemäßen Verfahrens ein.

Wünscht man Copolymer von Ethylen und (Meth)acrylsäure oder Maleinsäure und gegebenenfalls einem oder mehreren C₁-C₁₀-Alkyl(meth)acrylaten oder gegebenenfalls weiteren Comonomeren als filmbildendes Polymerisat einzusetzen, so wählt man bevorzugt Ethylencopolymerisate, welche als Comonomere einpolymerisiert enthalten:
(A) 60 bis 95 Gew.-%, bevorzugt 65 bis 85 Gew.-% Ethylen und
(B) 5 bis 40 Gew.-%, bevorzugt 15 bis 35 Gew.-% (Meth)acrylsäure oder Maleinsäure, besonders bevorzugt (Meth)acrylsäure,
wobei Angaben in Gew.-% auf gesamtes filmbildendes Polymerisat (b) bezogen sind.

Erfindungsgemäß als filmbildendes Polymerisat (b) eingesetzte Ethylencopolymerisate können bis zu 40 Gew.-%, bevorzugt bis zu 35 Gew.-%, bezogen jeweils auf die Summe aus Ethylen und einpolymerisierter (Meth)acrylsäure oder Maleinsäure eines oder mehrerer weiterer Comonomere (C) einpolymerisiert enthalten, beispielsweise

Vinyl-, Allyl und Methallylester von C₁-C₁₀-Alkylcarbonsäuren bzw. von Ameisensäure, beispielsweise Vinylformiat, Vinylpropionat und insbesondere Vinylacetat, einen oder mehrere C₁-C₁₀-Alkyl(meth)acrylate, insbesondere Methylacrylat, Methylmethacrylat, Ethylacrylat, Ethylmethacrylat, n-Butylacrylat, n-Butylmethacrylat, 2-Ethylhexylacrylat, 2-Ethylhexylmethacrylat,
weiterhin vinylaromatische Verbindungen wie beispielsweise α-Methylstyrol und insbesondere Styrol,
Isobuten und
α-Olefine wie beispielsweise CH₂=CH-n-C₁₆H₃₃,CH₂=CH-n-C₁₈H₃₇, CH₂=CH-n-C₂₀H₄₁ und CH₂=CH-n-C₂₂H₄₅

Vorstehend beschriebene Ethylencopolymerisate von Ethylen und (Meth)acrylsäure oder Maleinsäure und gegebenenfalls einem oder mehreren C₁-C₁₀-Alkyl(meth)-acrylaten oder gegebenenfalls weiteren Comonomeren kann man vorteilhaft durch radikalisch initiierte Copolymerisation unter Hochdruckbedingungen herstellen, beispielsweise in gerührten Hochdruckautoklaven oder in Hochdruckrohrreaktoren. Die Herstellung in gerührten Hochdruckautoklaven ist bevorzugt. Gerührte Hochdruckautoklaven sind an sich bekannt, eine Beschreibung findet man in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokyo, 1996**.** Bei ihnen verhält sich überwiegend das Verhältnis Länge/Durchmesser in Intervallen von 5:1 bis 30:1, bevorzugt 10:1 bis 20:1. Die gleichfalls anwendbaren Hochdruckrohrreaktoren findet man ebenfalls in Ullmann's Encyclopedia of Industrial Chemistry, 5. Auflage, Stichworte: Waxes, Bd. A 28, S. 146 ff., Verlag Chemie Weinheim, Basel, Cambridge, New York, Tokyo, 1996**.**

Geeignete Druckbedingungen für die Polymerisation sind 500 bis 4000 bar, bevorzugt 1500 bis 2500 bar. Die Reaktionstemperaturen liegen im Bereich von 170 bis 300°C, bevorzugt im Bereich von 200 bis 280°C.

Die Copolymerisation kann man in Gegenwart eines Reglers durchführen. Als Regler verwendet man beispielsweise Wasserstoff oder einen aliphatischen Aldehyd oder ein aliphatisches Keton oder Mischungen derselben, bevorzugt sind Propionaldehyd, Methylethylketon und Diethylketon.

Andere gut geeignete Regler sind alkylaromatische Verbindungen, beispielsweise Toluol, Ethylbenzol oder ein oder mehrere Isomere des Xylols. Bevorzugt verzichtet man auf den Einsatz von Aldehyden und Ketonen als Regler. Besonders bevorzugt dosiert man keine weiteren Regler mit Ausnahme der sogenannten Phlegmatisierer, die zur besseren Handhabbarkeit organischen Peroxiden beigefügt werden können und ebenfalls die Funktion eines Molekulargewichtsreglers haben können.

Als Starter für die radikalische Polymerisation können die üblichen Radikalstarter wie beispielsweise organische Peroxide, Sauerstoff oder Azoverbindungen eingesetzt werden. Auch Mischungen mehrerer Radikalstarter sind geeignet.

Geeignete Peroxide, ausgewählt aus den kommerziell erhältlichen Substanzen, sind beispielsweise
- Didekanoylperoxid, 2,5-Dimethyl-2,5-di(2-ethylhexanoylperoxy)hexan, tert.-Amylperoxy-2-ethylhexanoat, Dibenzoylperoxid, tert.-Butylperoxy-2-ethylhexanoat, tert.-Butylperoxydiethylacetat, tert.-Butylperoxydiethylisobutyrat, 1,4-Di(tert.-butylperoxycarbonyl)-cyclohexan als Isomerengemisch, tert.-Butylperisononanoat 1,1-Di-(tert.-butylperoxy)-3,3,5-trimethylcyclohexan, 1,1-Di-(tert.-butylperoxy)-cyclohexan, tert.-Amylperoxypivalat, Methyl-isobutylketonperoxid, tert.-Butylperoxyisopropylcarbonat, 2,2-(Di-tert.-butylperoxy)butan oder tert.-Butylperoxyacetat;
- tert.-Butylperoxybenzoat, Di-tert.-amylperoxid, Dicumylperoxid, die isomeren Di-(tert.-butylperoxyisopropyl)benzole, 2,5-Dimethyl-2,5-di-tert.-butylperoxyhexan, tert.-Butylcumylperoxid, 2,5-Dimethyl-2,5-di(tert.-butylperoxy)-hex-3-in, Di-tert.-butylperoxid, 1,3-Diisopropylbenzolmonohydroperoxid, Cumolhydroperoxid oder tert.-Butylhydroperoxid; oder
- dimere oder trimere Ketonperoxide, wie aus EP-A 0 813 550 bekannt.

Als Peroxide sind Di-tert.-butylperoxid, tert.-Butylperoxypivalat, tert.-Butylperoxyisononanoat oder Dibenzoylperoxid oder Gemische derselben besonders geeignet. Als Azoverbindung sei Azobisisobutyronitril ("AIBN") beispielhaft genannt. Radikalstarter werden in für Polymerisationen üblichen Mengen dosiert.

Das Mengenverhältnis der Comonomere Ethylen und ethylenisch ungesättigte Carbonsäure(n) bei der Dosierung entspricht üblicherweise nicht genau dem Verhältnis der Einheiten in erfindungsgemäß eingesetztem filmbildendem Polymerisat (b), weil ethylenisch ungesättigte Carbonsäuren im Allgemeinen leichter eingebaut werden als Ethylen.

Wie vorstehend beschrieben hergestellte Ethylencopolymerisate kann man beispielsweise in wässrige Dispersionen überführen, indem man sie im aufgeschmolzenen Zustand mit wässriger Base partiell oder vorzugsweise vollständig neutralisiert, wobei geeignete Basen vorstehend aufgeführt sind.

Zur Durchführung des erfindungsgemäßen Verfahrens vermischt man Stücke von offenzelligem Aminoplastschaumstoff (a) und filmbildendes Polymerisat (b). Das Vermischen geschieht üblicherweise in Gegenwart von Wasser.

Geeignete Vorrichtungen zum Vermischen von Stücken von offenzelligem Aminoplastschaumstoff (a) und filmbildendem Polymerisat (b) sind beliebige Gefäße wie beispielsweise Rührgefäße, weiterhin Extruder.

In einer Ausführungsform der vorliegenden Erfindung vermischt man Stücke von offenzelligem Aminoplastschaumstoff (a) und filmbildendes Polymerisat (b) in einem Gewichtsverhältnis im Bereich von 70 zu 30 bis 10 zu 90, bevorzugt 60 zu 40 bis 20 zu 80, wobei die Gewichtsverhältnisse jeweils auf den Feststoff bezogen sind.

Durch das Vermischen von Stücken von offenzelligem Aminoplastschaumstoff (a) und filmbildendem Polymerisat (b) erhält man eine Masse, die beispielsweise dünnflüssiger oder breiiger bis pastöser Konsistenz sein kann.

In einer Ausführungsform der vorliegenden Erfindung hat erfindungsgemäß zum Einsatz kommende Masse von Stücken von offenzelligem Aminoplastschaumstoff (a) und filmbildendem Polymerisat (b) eine dynamische Viskosität von über 50 bis 2000 dPa·s, bestimmt bei 23°C, bevorzugt im Bereich von 60 bis 1800 dPa·s und besonders bevorzugt mindestens 100 dPa·s. Dynamische Viskositäten lassen sich beispielsweise mit einem Brookfield-Viskosimeter bestimmen.

In einer Ausführungsform der vorliegenden Erfindung hat erfindungsgemäß zum Einsatz kommende Masse von Stücken von offenzelligem Aminoplastschaumstoff (a) und filmbildendem Polymerisat (b) einen Feststoffgehalt im Bereich von 5 bis 95 Gew.-%, bevorzugt 10 bis 80 Gew.-%.

Zur Durchführung des erfindungsgemäßen Verfahrens unterzieht man die wie vorstehend beschrieben erhaltene Masse von Stücken von offenzelligem Aminoplastschaumstoff (a) und filmbildendem Polymerisat (b) einem Form gebenden Schritt. Beispielsweise kann man die wie vorstehend beschrieben erhaltene Masse von Stücken von offenzelligem Aminoplastschaumstoff (a) und filmbildendem Polymerisat (b) gießen, spritzen oder mit Hilfe eines Gegenstands auftragen. Zur Formgebung kann man die wie vorstehend beschrieben erhaltene Masse von Stücken von offenzelligem Aminoplastschaumstoff (a) und filmbildendem Polymerisat (b) in ein formgebendes Gefäß geben, in ein Werkzeug oder in mehrere Werkzeuge einbringen. Beispiele für geeignete Werkzeuge sind Formen, Schablonen, Schalen aus beliebigen Materialien. Geeignete Formen sind wie Negative des herzustellenden Werkstückes ausgebildet.

Geeignete Werkzeuge können beispielsweise aus Glas, Keramik oder Metall, bevorzugt aus einer Legierung, insbesondere aus Stahl, oder aus einem Kunststoff sein wie beispielsweise Polyamid, Polyethylen oder Polypropylen.

Um eine glatte Oberfläche zu gewährleisten, kann man die in eine Form eingebrachte Masse mit einem Werkzeug glätten.

Nachdem man die Masse von Stücken von offenzelligem Aminoplastschaumstoff (a) und filmbildendem Polymerisat (b) einem Form gebenden Schritt unterzogen hat, trocknet man.

Man kann bei einer Temperatur trocknen, die unterhalb der Zersetzungstemperatur von filmbildendem Polymerisat (b) liegt. Temperaturen im Bereich von 20 bis 120°C sind im Allgemeinen bevorzugt.

In einer Ausführungsform der vorliegenden Erfindung geht man zur Durchführung des erfindungsgemäßen Verfahrens so vor, dass man im Gasstrom trocknet, beispielsweise indem man einen Strom von Gas, vorzugsweise Inertgas wie beispielsweise Stickstoff oder Edelgas, oder aber Luft über die mit Masse von Stücken von offenzelligem Aminoplastschaumstoff (a) und filmbildendem Polymerisat (b) gefüllte Form leitet.

In einer Ausführungsform der vorliegenden Erfindung geht man zur Durchführung des erfindungsgemäßen Verfahrens so vor, dass man im Vakuum bzw. bei vermindertem Druck trocknet, beispielsweise unter gleichzeitigem Erwärmen oder bei Zimmertemperatur.

In einer Ausführungsform der vorliegenden Erfindung geht man zur Durchführung des erfindungsgemäßen Verfahrens so vor, dass man an der Luft trocknet oder in einem Umlufttrockenschrank.

Man kann beispielsweise über einen Zeitraum von 1 Stunde bis 24 Stunden trocknen.

In einer Ausführungsform der vorliegenden Erfindung geht man zur Durchführung des erfindungsgemäßen Verfahrens so vor, dass man so lange im Vakuum oder Gasstrom oder bei vermindertem Druck trocknet, bis das vorgebildete Werkstück eine hinreichende mechanische Festigkeit aufweist, und anschließend an der Luft trocknet.

In einer Ausführungsform der vorliegenden Erfindung entformt man während des Trocknens das vorgebildete Werkstück und wendet es. Danach kann man das Trocknen fortsetzen. In dieser Ausführungsform wird im Allgemeinen die Dauer des Trocknens verkürzt.

Im Anschluss an die Durchführung des erfindungsgemäßen Verfahrens kann man das erhaltene Werkstück entformen, das heißt, man entfernt es vom Werkzeug. Das Entformen kann manuell oder automatisch erfolgen.

In einer Ausführungsform der vorliegenden Erfindung fügt man der Masse von Stücken von offenzelligem Aminoplastschaumstoff (a) und filmbildendem Polymerisat (b) ein oder mehrere Additive zu. Geeignete Additive sind beispielsweise Farbstoffe, organische oder anorganische Pigmente, Metallspäne, Biozide, Geruchshemmer und Weichmacher.

Beispiele für besonders geeignete Weichmacher sind Esterverbindungen, gewählt aus den Gruppen der mit C₁-C₁₀-Alkanol vollständig veresterten aliphatischen oder aromatischen Di- oder Polycarbonsäuren und der mindestens einfach mit Alkanol veresterten Phosphorsäure.

Bevorzugte Beispiele für mit C₁-C₁₀-Alkanol vollständig veresterte aromatische Di- oder Polycarbonsäuren sind mit Alkanol vollständig veresterte Phthalsäure, Isophthalsäure und Mellithsäure; beispielhaft seinen genannt: Di-n-octylphthalat, Di-n-nonylphthalat, Di-n-decylphthalat, Di-n-octylisophthalat, Di-n-nonylisophthalat, Di-n-decylisophthalat.

Bevorzugte Beispiele für mit C₁-C₁₀-Alkanol vollständig veresterte aliphatische Di- oder Polycarbonsäuren sind beispielsweise Adipinsäuredimethylester, Adipinsäurediethylester, Adipinsäuredi-n-butylester, Adipinsäurediisobutylester, Glutarsäuredimethylester, Glutarsäurediethylester, Glutarsäuredi-n-butylester, Glutarsäurediisobutylester, Bernsteinsäuredimethylester, Bernsteinsäurediethylester, Bernsteinsäuredi-n-butylester, Bernsteinsäurediisobutylester sowie Mischungen der vorstehend genannten Verbindungen.

Bevorzugte Beispiele für mindestens einfach mit C₁-C₁₀-Alkanol veresterten Phosphorsäure sind C₁-C₁₀-Alkyl-di-C₆-C₁₄-Aryl-Phosphate wie Isodecyldiphenylphosphat.

Weitere geeignete Beispiele für Weichmacher sind mindestens einfach mit C₁-C₁₀-Alkylcarbonsäure veresterte aliphatische oder aromatische Di- oder Polyole.

Bevorzugtes Beispiel für mindestens einfach mit C₁-C₁₀-Alkylcarbonsäure veresterte aliphatische oder aromatische Di- oder Polyole ist 2,2,4-Trimethylpentan-1,3-diolmonoisobutyrat.

Weitere geeignete Weichmacher sind Polyester, erhältlich durch Polykondensation von aliphatischer Dicarbonsäure und aliphatischem Diol, beispielsweise Adipinsäure oder Bernsteinsäure und 1,2-Propandiol, vorzugsweise mit einem M_{w} von 200 g/mol, und Polypropylenglykolalkylphenylether, vorzugsweise mit einem M_{w} von 450 g/mol.

Weitere geeignete Weichmacher sind mit zwei verschiedenen Alkoholen veretherte Polypropylenglykole mit einem Molekulargewicht M_{w} im Bereich von 400 bis 800 g/mol,
wobei vorzugsweise einer der Alkohole ein Alkanol, insbesondere ein C₁-C₁₀-Alkanol sein kann und der andere Alkohol vorzugsweise ein aromatischer Alkohol, beispielsweise o-Kresol, m-Kresol, p-Kresol und insbesondere Phenol sein kann.

Natürlich kann man Werkzeuge wie z. B. Formen, Schablonen, Schalen vor der Durchführung des formgebenden Schritts vorbereiten, beispielsweise mit einem oder mehreren Silikonen als Haftmittel oder mit einer oder mehreren Wachsemulsionen als Formtrennmittel vorbehandeln.

Ein weiterer Gegenstand der vorliegenden Erfindung sind Werkstücke, hergestellt nach dem erfindungsgemäßen Verfahren. Erfindungsgemäße Werkstücke können beliebige Formen haben. Erfindungsgemäße Werkstücke lassen sich beispielsweise gut zur Reinigung von Oberflächen einsetzen, weiterhin als Verpackungsmaterial, als Baumaterialien, Isoliermaterialien oder Schalldämmstoffe.

Erfindungsgemäße Werkstücke lassen sich gut beschreiben und bedrucken, beispielsweise nach dem Ink-Jet-Verfahren.

Ein weiterer Gegenstand der vorliegenden Erfindung ist die Verwendung von erfindungsgemäßen Werkstücken als Putzmaterialien zur Reinigung von Oberflächen. Ein weiterer Gegenstand der vorliegenden Erfindung ist ein Verfahren zur Reinigung von Oberflächen unter Verwendung von erfindungsgemäßen Werkstücken als Putzmaterialien, im Folgenden auch erfindungsgemäßes Reinigungsverfahren genannt.

Erfindungsgemäße Putzmaterialien können in beliebigen Formen ausgestaltet sein, beispielsweise in Form von Putztüchern, Lappen oder Putzschwämmen. Erfindungsgemäße Putzmaterialien kann man auch mit mindestens einer starren Grundlage, beispielsweise einer Unterlage, zu erfindungsgemäßen Verbunden fest verbinden oder mit einem oder mehreren Griffen, beispielsweise aus Kunststoff, versehen und derartige erfindungsgemäße Verbunde zum Reinigen von Oberflächen einsetzen.

Bei der Durchführung des erfindungsgemäßen Reinigungsverfahrens reinigt man strukturierte oder vorzugsweise glatte glänzende Oberflächen von Verunreinigungen, enthaltend mindestens eine Substanz, die gewählt wird aus
Fetten, Ölen, Wachsen, beispielsweise Polyethylenwachse, Paraffinwachse, Paraffinöle, Esteröle, native Öle und Fette, Schmierfette, Lagerfette, Stauferfette, Montanwachse,
Metallsalzen anionischer Tenside wie beispielsweise Kalkseife,
Biofilmen, beilspielsweise Schimmel oder Pseudomonaten-Biofilme,
Polymeren, beispielsweise Lackspritzer, Polyurethanschaum, Silikone (Polysiloxane), Metalloxiden, beispielsweise Kupfer-, Blei- oder Nickeloxid oder durch beispielsweise Korrosion entstandenen Rost, oder Rostpartikel oder Flugrost, insbesondere Eisenoxide,
Metallhydroxiden und Metallcarbonaten, die neutral, sauer oder basisch sein können, insbesondere Eisen-, Kupfer-, Nickelhydroxid, Aluminiumhydroxid, Magnesiumhydroxid, MgCO₃, basisches MgCO₃, CaCO₃, wobei Metalloxide, Metallcarbonate und Metallhydroxide durch Korrosion aus dem Grundmetall der strukturierten Oberfläche beispielsweise eines Werkzeugs oder Werkstückes entstanden oder aber sekundär abgelagert worden sein können,
Resten von Schmierstoffen, beispielsweise partiell verkokte oder partiell oder vollständig verharzte Schmierstoffe, und gebrochenen Emulsionen. Beispielhaft seien zu nennen: verharzte native Esteröle an z. B. Kettensäge oder verkokte Öle an Heizplatten der Polyester-Filamentfaserspinnerei,
Beschriftungen oder Bemalungen mit öl- oder wasserbasierenden Farbstiften.

Verunreinigungen können auf zu reinigenden Oberflächen gleichmäßig oder ungleichmäßig verteilt sein, beispielsweise in Form von Flecken, Rändern, Spritzern, oder als Film.

Zur Durchführung des erfindungsgemäßen Reinigungsverfahrens führt man ein oder mehrere erfindungsgemäße Werkstücke einfach oder vorzugsweise mehrfach über die zu reinigende Oberfläche. Dabei kann man den Anpressdruck beliebig wählen. Man kann ein oder mehrere erfindungsgemäße Werkstücke manuell oder maschinell über die zu reinigende Oberfläche führen.

Zur Durchführung des erfindungsgemäßen Reinigungsverfahrens kann man ein oder mehrere erfindungsgemäße Werkstücke in mit beispielsweise Wasser befeuchteter Form oder vorzugsweise in trockener Form verwenden.

Man beobachtet, dass sich durch das erfindungsgemäße Reinigungsverfahren Verunreinigungen sehr gut entfernen lassen und insbesondere glatte glänzende Oberflächen nicht oder nicht signifikant verkratzt werden.

Ein weiterer Gegenstand der vorliegenden Erfindung ist die Verwendung von erfindungsgemäßen Werkstücken als oder zur Herstellung von Verpackungsmaterial.

Als Verpackungsmaterial im Sinne der vorliegenden Erfindung seien insbesondere Verpackungschips und Formteile genannt, die zu verpackende Güter in beispielsweise Kartons oder Kisten gegen Stöße und/oder Verlagern/Verrutschen sichern. Als Verpackungsmaterialien eingesetzt, sind erfindungsgemäße Werkstücke nicht nur vorteilhaft in der Anwendung, sondern auch leicht zu entfernen.
Die Erfindung wird durch Arbeitsbeispiele erläutert.

### Arbeitsbeispiele

### I.1 Herstellung von Aminoplastschaumstoff (a.1)

In einem offenen Gefäß wurde ein sprühgetrocknetes Melamin/Formaldehyd-Vorkondensat (Molverhältnis 1:3, Molekulargewicht etwa 500 g/mol) zu einer wässerigen Lösung mit 3 Gew.-% Ameisensäure und 1,5 % des Natriumsalzes eines Gemisches von Alkylsulfonaten mit 12 bis 18 C-Atomen im Alkylrest (Emulgator K 30 der Fa. Bayer AG), wobei die Prozentzahlen auf das Melamin/Formaldehyd-Vorkondensat bezogen sind, gegeben. Die Konzentration des Melamin/Formaldehyd-Vorkondensats, bezogen auf die gesamte Mischung aus Melamin/Formaldehyd-Vorkondensat und Wasser, betrug 74 Gew.-%. Die so erhältliche Mischung wurde kräftig gerührt, dann wurden 20 Gew.-% n-Pentan zugegeben. Es wurde so lange (etwa 3 min lang) weitergerührt, bis eine homogen aussehende Dispersion entstand. Diese wurde auf ein teflonisiertes Glasgewebe als Trägermaterial aufgerakelt und in einem Trockenschrank, in dem eine Lufttemperatur von 150°C herrschte, aufgeschäumt und gehärtet. Dabei stellte sich als Massetemperatur im Schaumstoff die Siedetemperatur des n-Pentans ein, die unter diesen Bedingungen bei 37,0 °C liegt. Nach 7 bis 8 min war die maximale Steighöhe des Schaumstoffs erreicht. Der Schaumstoff wurde noch weitere 10 min bei 150 °C im Trockenschrank belassen; anschließend wurde er 30 min lang bei 180° C getempert. Man erhielt unmodifizierten Schaumstoff (a.1).

Es wurden am unmodifizierten Schaumstoff (a.1) die folgenden Eigenschaften ermittelt: 99,6% offenzellig nach DIN ISO 4590,
Stauchhärte (40%) 1,3 kPa bestimmt nach DIN 53577,
Dichte 7,6 kg/m³ bestimmt nach EN ISO 845,
mittlerer Porendurchmesser 210 µm, bestimmt durch Auswertung mikroskopischer Aufnahmen an Schnitten,
BET-Oberfläche von 6,4 m²/g, bestimmt nach DIN 66131,
Schallabsorption von 93 %, bestimmt nach DIN 52215,
Schallabsorption von mehr als 0,9, bestimmt nach DIN 52212.

### I.2 Herstellung von Stücken von Aminoplastschaumstoff durch Mahlen

Ein Quader aus Aminoplastschaumstoff (a.1) wurde mit Hilfe einer schlagmesserbetriebenen Laboranalysenmühle (Typ A10) gemahlen und anschließend über ein Rüttelsieb der Maschenweite 250 µm gesiebt. Man erhielt Stücke von Aminoplastschaumstoff mit einem mittleren Durchmesser von bis zu 250 µm. Der Siebrückstand wurde verworfen.
II. Herstellung eines filmbildenden Polymerisats (b.1) in dispergierter Form
II.1. Herstellung eines filmbildenden Polymerisats (b.1) von Ethylen und Methacrylsäure

In einem Hochdruckautoklaven, wie er in der Literatur beschrieben ist (M. Buback et al., Chem. Ing. Tech. 1994, 66, 510), wurden Ethylen und Methacrylsäure copolymerisiert. Dazu wurde Ethylen (12,3 kg/h) unter dem Reaktionsdruck von 1700 bar in den Autoklaven eingespeist. Getrennt davon wurden 1,04 l/h Methacrylsäure zunächst auf einen Zwischendruck von 260 bar verdichtet und anschließend unter dem Reaktionsdruck von 1700 bar eingespeist. Getrennt davon wurde 2 l/h einer Initiatorlösung, bestehend aus tert.-Amylperoxypivalat (0,13 mol·l⁻¹ in Isododekan), unter dem Reaktionsdruck von 1700 bar in den Autoklaven eingespeist. Die Reaktionstemperatur betrug 220°C. Man erhielt 3,4 kg/h filmbildendes Polymerisat (b.1) mit den folgenden Eigenschaften: 26,2 Gew.-% Methacrylsäure, 73,8 Gew.-% Ethylen, Schmelzbereich 75 - 85°C, gemessen nach DIN 51007, p 0,9613 g/cm³, MFI 10,5 g/10 min, gemessen bei 120°C und einer Belastung von 325 g nach DIN 53735, Säurezahl 170,5 mg KOH/g (bestimmt nach ES ISO 3682).

Der Gehalt an Ethylen und Methacrylsäure im filmbildenden Polymerisat (b.1) wurde NMR-spektroskopisch bzw. durch Titration (Säurezahl) bestimmt. Die Säurezahl des filmbildenden Polymerisats (b.1) wurde titrimetrisch nach DIN 53402 bestimmt. Der KOH-Verbrauch korrespondiert mit dem Methacrylsäure-Gehalt im filmbildenden Polymerisat (b.1).

### II.2. Herstellung einer wässrigen Dispersion von filmbildendem Polymerisat (b.1)

### II.2.1 Herstellung einer wässrigen Dispersion D1

In einem 2-Liter-Rührkessel mit Ankerrührer und Rückflusskühler wurden 250 g filmbildendes Polymerisat (b.1) nach Beispiel II.1, 34 g 25 Gew.-% wässrige Ammoniaklösung und 716 ml entionisiertes Wasser vorgelegt. Man erwärmte unter Rühren auf 95°C und rührte drei Stunden bei 95°C nach. Man erhielt wässrige Dispersion D1 mit einem pH-Wert von 8,5. Der Feststoffgehalt von D1 betrug 25,3 Gew.-%.

### II.2.2 Herstellung einer wässrigen Dispersion D2

In einem 2-Liter-Rührkessel mit Ankerrührer und Rückflusskühler wurden 206,8 g filmbildendes Polymerisat (b.1) nach Beispiel II.1, 34,9 g *N,N*-Dimethylethanolamin und 758,3 ml entionisiertes Wasser vorgelegt. Man erwärmte unter Rühren auf 95°C und rührte drei Stunden bei 95°C nach. Man erhielt wässrige Dispersion D2 mit einem pH-Wert von 8,5. Der Feststoffgehalt von D2 betrug 21 Gew.-%.

### III. Herstellung von erfindungsgemäßen Werkstücken (allgemeine Vorschrift 1)

### III.1 Herstellung von erfindungsgemäßen Werkstücken (allgemeine Vorschrift 1)

In einem 1-I-Rührgefäß wurde wässrige Dispersion D1 oder D2 gemäß Tabelle 1 vorgelegt. Man rührte mit einer Geschwindigkeit von 600 U/min und fügte die in Tabelle 1 abgegebene Menge von Stücken von Aminoplastschaumstoff gemäß Beispiel I.2 zu. Man rührte weitere 10 Minuten mit 600 U/min und erhielt eine breiige Masse. Die so erhaltene breiige Masse füllte man in eine Keramikschale (Innenabmessungen 10. 20 cm) und überführte sie in einen Vakuumtrockenschrank. Man trocknete bei 110°C/150 mbar über einen Zeitraum von sechs Stunden. Danach entformte man das sich ausbildende Werkstück, wendete es und trocknete es bei 110°C im N₂-Strom über einen Zeitraum von weiteren drei Stunden. Anschließend ließ man noch 12 Stunden bei Zimmertemperatur und 150 mbar im N₂-Strom trocknen. Man erhielt ein erfindungsgemäßes Werkstück gemäß Tabelle 1.

### III.2 Herstellung von erfindungsgemäßen Werkstücken (allgemeine Vorschrift 2)

In einem 1-I-Rührgefäß wurde wässrige Dispersion D1 oder D2 gemäß Tabelle 1 vorgelegt. Man rührte mit einer Geschwindigkeit von 600 U/min und fügte die in Tabelle 1 abgegebene Menge von Stücken von Aminoplastschaumstoff gemäß Beispiel I.2 zu. Man rührte weitere 10 Minuten mit 600 U/min und erhielt eine breiige Masse. Die so erhaltene breiige Masse füllte man in eine Keramikschale (Innenabmessungen 10. 20 cm) und überführte sie in einen Umlufttrockenschrank. Man trocknete bei 110°C im N₂-Strom über einen Zeitraum von drei Stunden. Danach entformte man das sich ausbildende Werkstück, wendete es und trocknete es bei 110°C im N₂-Strom über einen Zeitraum von weiteren drei Stunden. Anschließend ließ man noch 12 Stunden bei Zimmertemperatur und 150 mbar im N₂-Strom trocknen. Man erhielt ein erfindungsgemäßes Werkstück gemäß Tabelle 1.

**Tabelle 1: Herstellung von erfindungsgemäßen Werkstücken**

| Nummer | Menge Stücke von (a.1) [g] | [g] Dispersion | | Trocknung |
|---|---|---|---|---|
| | | D1 | D2 | |
| W1 | 30 | 200 | | Vakuum |
| W2 | 50 | | 200 | Vakuum |
| W3 | 50 | | 200 | Umluft |
| W4 | 60 | 200 | | Umluft |

Bemerkung: Vakuum steht für Vakuumtrockenschrank, Umluft für Umlufttrockenschrank.

### IV. Erfindungsgemäßes Reinigungsverfahren

Ein Whiteboard wurde zunächst mit einem roten Filzstift beschriftet. Anschließend nahm man Werkstück W1 und führte es zweimal im trockenen Zustand über das trockene Whiteboard, ohne fest aufzudrücken. Die Beschriftung war vollkommen entfernt. W1 ließ sich ohne Zusätze mühelos und rückstandslos reinigen. Das Whiteboard war nicht verkratzt, sondern behielt seine glänzende Oberfläche.

Das wie vorstehend beschriebene Reinigungsverfahren konnte jeweils in analoger Weise mit den erfindungsgemäßen Werkstücken W2 bis W4 mit ebenfalls sehr guten Ergebnissen durchgeführt werden.

## Patentansprüche

1. Verfahren zur Herstellung von Werkstücken, **dadurch gekennzeichnet, dass** man
(a) Stücke von offenzelligem Aminoplastschaumstoff mit einem mittleren Durchmesser im Bereich von 50 µm bis 5 mm (Gewichtsmittel)
(b) mit mindestens einem filmbildenden Polymerisat vermischt, gewählt aus Copolymerisaten von mindestens einer ethylenisch ungesättigten Mono-oder Dicarbonsäure,
einem Form gebenden Schritt unterzieht
und danach trocknet.

2. Verfahren nach Anspruch 1, **dadurch gekennzeichnet, dass** man Stücke von offenzelligem Aminoplastschaumstoff (a) aus Aminoplastschaumstoff mit einer Dichte im Bereich von 5 bis 500 kg/m³ und einem mittleren Porendurchmesser im Bereich von 1 µm bis 1 mm durch mechanisches Zerkleinern herstellt.

3. Verfahren nach Anspruch 1 oder 2, **dadurch gekennzeichnet, dass** es sich bei filmbildendem Polymerisat um ein Polymerisat mit einer Mindestfilmbildungstemperatur im Bereich von -30°C bis +50°C handelt.

4. Verfahren nach einem der Ansprüche 1 bis 3, **dadurch gekennzeichnet, dass** filmbildendem Polymerisat (b) um ein (Co)polymerisat von (Meth)acrylsäure handelt.

5. Verfahren nach einem der Ansprüche 1 bis 4, **dadurch gekennzeichnet, dass** der Form gebende Schritt gewählt wird aus Gießen und Spritzen einer Mischung von Stücken von offenzelligem Aminoplastschaumstoff (a) und filmbildendem Polymerisat (b).

6. Verfahren nach einem der Ansprüche 1 bis 5, **dadurch gekennzeichnet, dass** man während des Trocknens das Werkstück entformt und wendet.

7. Verfahren nach einem der Ansprüche 1 bis 6, **dadurch gekennzeichnet, dass** man bei Temperaturen im Bereich von 20 bis 120°C trocknet.

8. Werkstücke, erhältlich nach einem Verfahren nach mindestens einem der Ansprüche 1 bis 7.

9. Verwendung von Werkstücken nach Anspruch 8 als Putzmaterialien zur Reinigung von Oberflächen.

10. Verfahren zur Reinigung von Oberflächen unter Verwendung von Werkstücken nach Anspruch 8 als Putzmaterialien.

11. Verwendung von Werkstücken nach Anspruch 8 als oder zur Herstellung von Verpackungsmaterial.

## Claims

1. A process for the production of workpieces, wherein
(a) pieces of open-cell aminoplast foam having an average diameter in the range from 50 µm to 5 mm (weight average)
(b) are mixed with at least one film-forming polymer, selected form copolymers of at least one ethylenically unsaturated mono- or dicarboxylic acid,
subjected to a shape-imparting step
and then dried.

2. The process according to claim 1, wherein pieces of open-cell aminoplast foam (a) are produced from aminoplast foam having a density in the range from 5 to 500 kg/m³ and an average pore diameter in the range from 1 µm to 1 mm by mechanical comminution.

3. The process according to claim 1 or 2, wherein the film-forming polymer is a polymer having a minimum film formation temperature in the range from -30°C to +50°C.

4. The process according to any of claims 1 to 3, wherein film-forming polymer (b) is a (co)polymer of (meth)acrylic acid.

5. The process according to any of claims 1 to 4, wherein the shape-imparting step is selected from casting and injection molding of a mixture of pieces of open-cell aminoplast foam (a) and film-forming polymer (b).

6. The process according to any of claims 1 to 5, wherein the workpiece is removed from the mold and turned during drying.

7. The process according to any of claims 1 to 6, wherein drying is effected at temperatures in the range from 20 to 120°C.

8. A workpiece obtainable by a process according to at least one of claims 1 to 7.

9. The use of workpieces according to claim 8 as cleaning materials for cleaning surfaces.

10. A method for cleaning surfaces using workpieces according to claim 8 as cleaning materials.

11. The use of workpieces according to claim 8 as or for the production of packaging material.

## Revendications

1. Procédé pour la fabrication de pièces à travailler, **caractérisé en ce qu'**on soumet mélange
(a) des pièces de mousse d'aminoplaste à cellules ouvertes, ayant un diamètre moyen dans la plage de 50 µm à 5 mm (moyenne en poids)
(b) avec au moins un polymère filmogène choisi parmi des copolymères d'au moins un monomère à insaturation éthylénique ou d'un acide dicarboxylique
on soumet le mélange à une étape de mise en forme
et ensuite on le sèche.

2. Procédé selon la revendication 1, **caractérisé en ce qu'**on prépare par fragmentation mécanique des pièces de mousse d'aminoplaste (a) à cellules ouvertes, à partir de mousse d'aminoplaste ayant une densité dans la plage de 5 à 500 kg/m³ et un diamètre moyen de pore dans la plage de 1 µm à 1 mm.

3. Procédé selon la revendication 1 ou 2, **caractérisé en ce que** le polymère filmogène consiste en un polymère ayant une température minimale de formation de film dans la plage de -30 °C à +50 °C.

4. Procédé selon l'une quelconque des revendications 1 à 3, **caractérisé en ce que** le polymère filmogène (b) consiste en un (co)polymère d'acide (méth)-acrylique.

5. Procédé selon l'une quelconque des revendications 1 à 4, **caractérisé en ce que** l'étape de mise en forme est choisie parmi la coulée et l'injection d'un mélange de pièces de mousse d'aminoplaste (a) à cellules ouvertes et de polymère filmogène (b).

6. Procédé selon l'une quelconque des revendications 1 à 5, **caractérisé en ce que** la pièce à travailler est éjectée et tournée pendant le séchage.

7. Procédé selon l'une quelconque des revendications 1 à 6, **caractérisé en ce qu'**on effectue le séchage à des températures dans la plage de 20 à 120 °C.

8. Pièces à travailler, pouvant être obtenues conformément à un procédé selon au moins l'une des revendications 1 à 7.

9. Utilisation de pièces à travailler selon la revendication 8, en tant que matériau de récurage pour le nettoyage de surface.

10. Procédé pour le nettoyage de surfaces avec utilisation de pièces à travailler selon la revendication 8, en tant que matériaux de récurage.

11. Utilisation de pièces à travailler selon la revendication 8 ou pour la fabrication de matériau d'emballage.
